# EUROPEAN PATENT SPECIFICATION

(11) **EP 3 446 887 B1**
(45) Date of publication and mention of the grant of the patent: **30.12.2020**
(21) Application number: 18187821.6
(22) Date of filing: 07.08.2018
(51) Int. Cl.: B60C 7/14, B60C 7/18

(54) **AIRLESS TIRE**
LUFTLOSER REIFEN
PNEU SANS AIR

(30) Priority: 24.08.2017 JP 2017160805
(43) Date of publication of application: 27.02.2019
(73) Proprietor: SUMITOMO RUBBER INDUSTRIES, LTD., Kobe-shi, Hyogo-ken 651-0072 (JP)
(72) Inventor: IWAMURA, Wako, Kobe-shi, Hyogo 651-0072 (JP); SUGIYA, Makoto, Kobe-shi, Hyogo 651-0072 (JP)
(74) Representative: Manitz Finsterwald Patent- und Rechtsanwaltspartnerschaft mbB

(56) References cited:
- JP-A- 2014 080 164
- JP-A- 2014 100 933
- JP-A- 2015 039 986
- JP-A- 2015 101 210
- US-A- 1 023 344
- US-A- 1 348 522
- US-A- 2 705 539
- US-A- 3 018 809
- US-A1- 2009 173 421

## Description

### Technical Field

The present invention relates to an airless tire.

### Background Art

Japanese Patent Application Publication No.2017-081199 (Patent document 1) discloses an airless tire composed of a tread ring having a tread, a hub attached to a vehicle's axle, and spokes connecting between the tread ring and the hub, wherein the spokes are each increased in the compressive stiffness in a radially outer part on the tread ring side as compared with a radially inner part on the hub side to improve the durability.

JP 2014-080164 A discloses an airless tire according to the preamble of claim 1.

JP 2015-039986 A and JP 2015-101210 A each disclose airless tires with spokes whose widths vary in the radial cirection.

### Summary of the Invention

In the airless tire disclosed in Patent document 1, as the compressive stiffness of the spokes is relatively decreased in the radially inner parts, the ride comfort may be improved, but there is a possibility that the rolling resistance of the tire is increased. By increasing the compressive stiffness, the rolling resistance may be reduced, but the ride comfort is deteriorated. Thus, the airless tire has room for improvement in order to achieve both of the durability and the ride comfort, while reducing the rolling resistance.

It is therefore, an object of the present invention to provide an airless tire, in which, by employing cross radial members connecting between a tread ring and a hub instead of conventional spokes, the durability and the ride comfort can be achieved while reducing the rolling resistance. Claim 1 provides an airless tire according to the present invention.

It is preferable that the second length measured along the second radial member from the second radially inner end to the second radially outer end is equal to the first length.

It is preferable that the first length is not more than 110 % of a first distance between the first radially inner end and the first radially outer end.

It is preferable that the width of each of the cross radial members is more than its thickness.

It is preferable that each of the cross radial members has a width in the tire circumferential direction which is constant in the range from the hub to the tread ring.

It is preferable that the first radial members and the second radial members are alternately arranged in the tire circumferential direction.

Therefore, in the airless tire according to the present invention, as the cross radial members including the first radial members and the second radial members have lengths more than the radial distance between the hub and tread ring, it is possible reduce deformation of the first and second radial members cause by the deflection of the tread ring during running, therefore, the airless tire according to the present invention can be improved in the durability.

Further, as the first radial members cross the second radial members when viewed in the tire circumferential direction, the vertical spring constant of the airless tire can be reduced while maintaining adequate rigidity of the radial members. Furthermore, the cross radial members can support the tread ring uniformly, and uncomfortable vibrations can be prevented. Thus, the airless tire according to the present invention can improve the ride comfort.

In addition, as the first length of the first radial members is not more than 180 % of the radial distance between the hub and tread ring, the rigidity in the tire radial direction of the first radial members is high, and thereby the deflection of the tread ring of the during running can be prevented. Thus, the rolling resistance of the airless tire according to the present invention can be reduced.

### Brief Description of the Drawings

Fig. 1 is a perspective view of an airless tire as an embodiment of the present invention.
Fig. 2 is a side view of the airless tire in Fig. 1.
Fig. 3 is a cross sectional view of the first radial member taken along line A-A of Fig. 2.
Fig. 4 is a cross sectional view of the second radial member taken along line B-B of Fig. 2.
Fig. 5 is a perspective view showing one of first radial members and one of second radial members of another example of the cross radial members.

### Description of the Preferred Embodiments

Embodiments of the present invention will now be described in detail in conjunction with accompanying drawings.

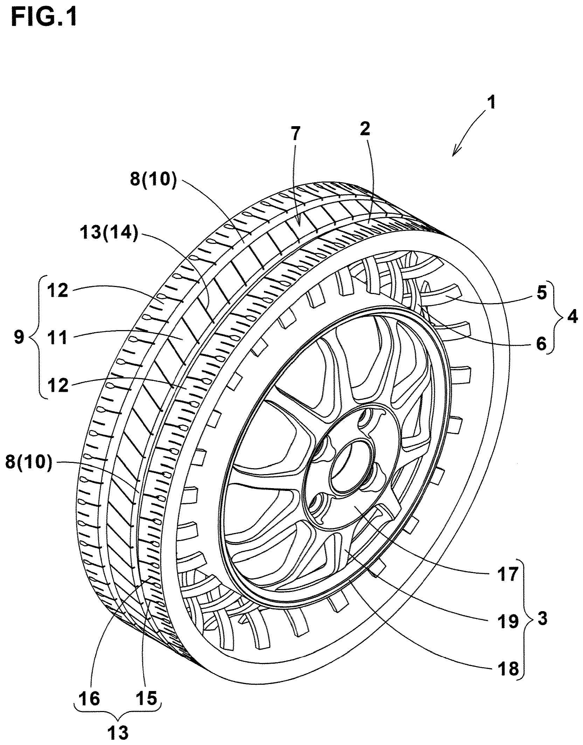

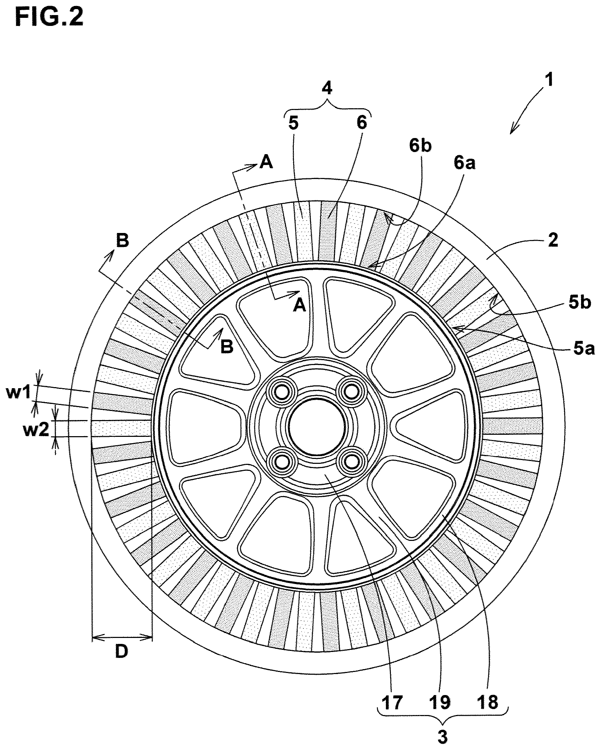

Fig. 1 and Fig. 2 show an airless tire 1 as an embodiment of the present invention. The airless tire 1 comprises a tread ring 2 having a tread contacting with the ground during running, the hub 3 disposed radially inside the tread ring 2, and load-supporting elastic cross radial members 4 connecting the tread ring 2 with the hub 3.

The airless tire 1 supports the tire load by the cross radial members 4 extending between the hub 3 and the tread ring 2 unlike a pneumatic tire which supports the tire load by its internal air pressure. Accordingly, the airless tire 1 does not suffer from puncture.

As shown in Fig. 2 to Fig. 4, the cross radial members 4 include the first radial members 5 and the second radial members 6.

The first radial member 5 extends from its first radially inner end 5a to its first radially outer end 5b.

The second radial member 6 extends from its second radially inner end 6a to its second radially outer end 6b.

In Fig. 2, for the sake of easy identification, the first radial members 5 and the second radial members 6 are filled with a thin dot pattern and a dense dot pattern, respectively.

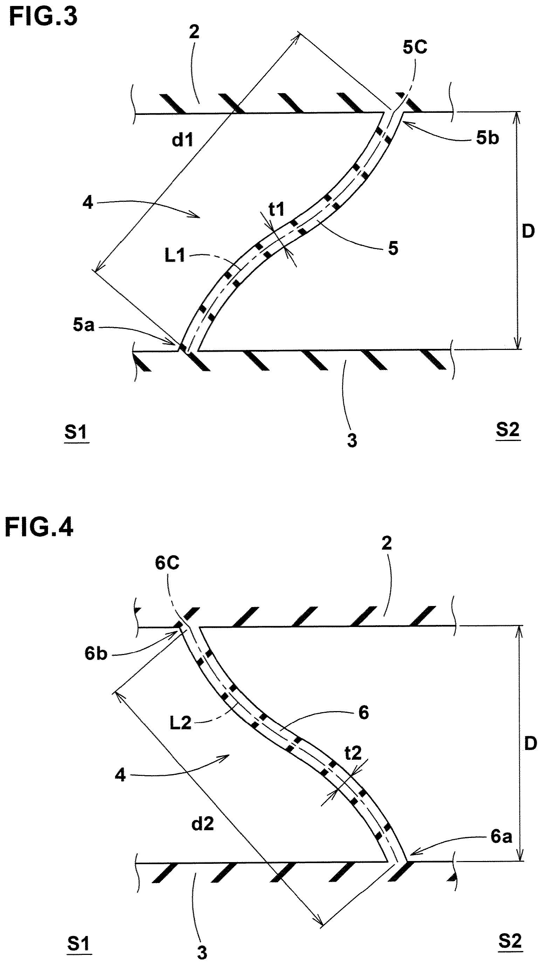

As shown in Fig. 3 and Fig. 4, the radially inner ends 5a and the second radially outer ends 6b are positioned on one side s1 in the tire widthwise direction, whereas the second radially inner ends 6a and the first radially outer ends 5b are positioned on the other side S2 in the tire widthwise direction.

Therefore, the first radial members 5 cross the second radial members 6 when viewed in the tire circumferential direction as shown in Fig. 1. As a result, the airless tire 1 can be reduced in the vertical spring constant, while allowing the tread ring 2 to have adequate rigidity. Further, the cross radial members 4 can support the tread ring 2 uniformly so as not to cause uncomfortable vibrations. Therefore, the airless tire 1 can improve the ride comfort.

Furthermore, the lengths of the cross radial members 4 become more than the distance D in the tire radial direction between the hub 3 and the tread ring 2. As a result, it is possible to relatively reduce deformation of the cross radial members 4 caused by deflection of the tread ring 2 during running, therefore, the durability of the airless tire 1 can be improved.

The first length L1 measured along the first radial member 5 from the first radially inner end 5a to the first radially outer end 5b is set to be not more than 180 % of the distance D in the tire radial direction between the hub 3 and the tread ring 2.

To be precise, as shown in Fig. 3, the first length L1 of the first radial member 5 is measured along the center line 5C in the thickness t1 in the tire axial direction of the first radial member 5 from the first radially inner end 5a to the first radially outer end 5b.

Preferably, the second length L2 measured along the second radial member 6 from the second radially inner end 6a to the second radially outer end 6b is set to be not more than 180 % of the distance D in the tire radial direction between the hub 3 and the tread ring 2.

To be precise, as shown in Fig. 4, the second length L2 of the second radial member 6 is measured along the center line 6c in the thickness t2 in the tire axial direction of the second radial member 6 from the second radially inner end 6a to the second radially outer end 6b.

such radial members 5 and 6 have rigidity in the tire radial direction which is sufficient to prevent excessive deflection of the tread ring 2 during running, as a result, the rolling resistance of the airless tire 1 can be reduced.

As explained above, by crossing the first radial members 5 and the second radial members 6 and specifically defining their lengths, the airless tire 1 can achieve durability and ride comfort, while reducing the rolling resistance.

Further preferable features for the airless tire 1 in the present embodiment are described below.

The tread ring 2 has a tread face 7 contacting with the ground, and the tread face 7 in the present embodiment is, as shown in Fig. 1, provided with tread grooves 8 and land regions 9 divided by the tread grooves 8.

The tread grooves 8 in this example include two circumferential main grooves 10. Thus, the land regions 9 include a crown land region 11 between the two circumferential main grooves 10, and a pair of shoulder land regions 12 axially outside the circumferential main grooves 10.

The land regions 9 in this example are provided with a number of sipes 13 extending in the tire axial direction. The sipes 13 include crown sipes 14 disposed in the crown land region 11, and first shoulder sipes 15 and second shoulder sipes 16 disposed in the shoulder land regions 12.

The crown sipes 14 in this example are each connected to the two circumferential main grooves 10. The first shoulder sipes 15 in this example are connected to the circumferential main grooves 10, but the second shoulder sipes 16 in this example are terminated within the shoulder land regions 12 without connected to the circumferential main grooves 10. such sipes 13 can optimize the rigidity of the tread face 7 and improve the ride comfort.

In the present embodiment, as shown in Fig. 1 and Fig. 2, the hub 3 comprises a fixed portion fixed to a vehicle's axle 17, a cylindrical portion 18 to which radially inner ends 5a and 6a of the cross radial members 4 are connected, and a connecting portion 19 connecting between the fixed portion 17 and the cylindrical portion 18. The connecting portion 19 in the present embodiment is composed of spokes extending between the fixed portion 17 and the cylindrical portion 18. The number of the spokes is less than the number of the cross radial members 4. Thus, the hub 3 can achieve weight reduction and rigidity. However, the connecting portion 19 can be formed in the form of a disk instead of the spokes.

In the present embodiment, the first radial members 5 and the second radial members 6 of the cross radial members 4 are arranged alternately in the tire circumferential direction in order to support the tread ring 2 uniformly in the tire circumferential direction and thereby to suppress uncomfortable vibrations and improve the ride comfort.

According to claim 1, as shown in Fig. 2 to Fig. 4, the cross radial members 4 are each formed in the form of a plate. Each radial member 4 has a thickness t1, t2 in the tire axial direction and a width w1, w2 in the tire circumferential direction, and preferably, the width w1, w2 in the tire circumferential direction is more than the thickness t1, t2. Specifically, it is preferable that the first radial member 5 is formed in the form of a plate where the width w1 in the tire circumferential direction is more than the thickness t1 in the tire axial direction, and the second radial member 6 is formed in the form of a plate where the width w2 in the tire circumferential direction is more than the thickness t2 in the tire axial direction.
Such cross radial members 4 can reduce variations in the tire circumferential direction of the deflection of the tread ring 2 during running, and can reduce the rolling resistance of the airless tire 1.

In Fig. 2, the widths w1 and w2 in the tire circumferential direction of the cross radial members 4 are constant in the range in the tire radial direction from the hub 3 to the tread ring 2. However, according to claim 1, each of the cross radial members 20 is partially decreased in the width in the tire circumferential direction so that a constricted part 23 is formed in the range in the tire radial direction from the hub 3 to the tread ring 2.
The width w1 in the tire circumferential direction of the first radial members 5 is preferably equal to the width w2 in the tire circumferential direction of the second radial members 6. Such cross radial members 4 can reduce the variations in the tire circumferential direction of the deflection of the tread ring 2 during running, and further reduce the rolling resistance of the airless tire 1.

As shown in Fig. 3, the first length L1 of the first radial member 5 is preferably set to be not less than 110 %, more preferably not less than 120 % of the distance D in the tire radial direction between the hub 3 and the tread ring 2 in order to reduce deformation of the first radial member 5 caused by the deflection of the tread ring 2 during running and thereby improve the durability of the airless tire 1.

As shown in Fig. 4, the second length L2 of the second radial member 6 is preferably set to be not less than 110 %, more preferably not less than 120 % of the distance D in the tire radial direction between the hub 3 and the tread ring 2 in order to reduce deformation of the second radial member 6 caused by the deflection of the tread ring 2 during running and thereby improve the durability of the airless tire 1.

It is desirable that the first length L1 of the first radial members 5 is set to be equal to the second length L2 of the second radial members 6 in order to uniformly restrict the deflection of the tread ring 2 during running, and thereby to reduce the rolling resistance of the airless tire 1.

According to claim 1, each of the cross radial members 4 (5, 6) is curved in a tire meridian section including the radial member concerned as shown in Figs. 3 and 4. It is desirable that the first radial members 5 and the second radial members 6 are curved in the respective tire meridian sections symmetrically about a plane parallel with the tire equatorial plane in order to uniformly support the tread ring 2. Therefore, the airless tire 1 can be improved in the ride comfort.

In the present embodiment, the first length L1 of the first radial member 5 is more than the first linear distance d1 between the first radially inner end 5a and first radially outer end 5b, and
the second length L2 of the second radial member 6 is more than the second linear distance d2 between the second radially inner end 6a and second radially outer end 6b.
The first length L1 is preferably not more than 110 % of the first linear distance d1.
The second length L2 is preferably not more than 110 % of the second linear distance d2.
Such cross radial members 4 allow the tread ring 2 to have adequate rigidity, therefore, the airless tire 1 is further reduced in the rolling resistance.

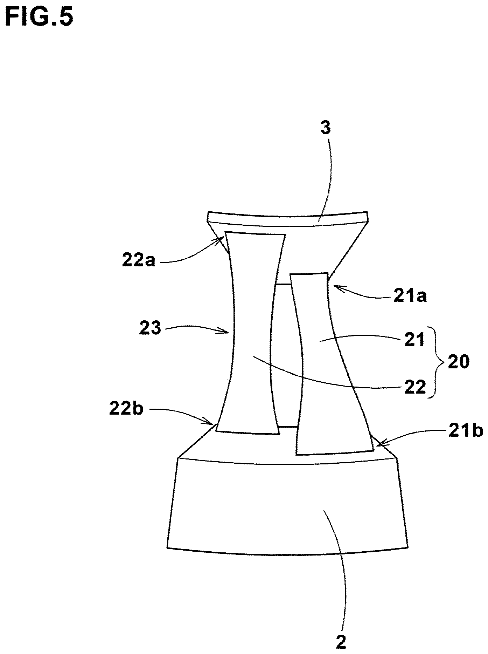

Fig. 5 shows cross radial members 20 as a modified example of the above-mentioned cross radial members 4.

similarly to the former example, the cross radial members 20 include: first radial members 21 each extending from the first radially inner end 21a to the first radially outer end 21b, and second radial members 22 each extending from the second radially inner end 22a to the second radially outer end 22b, wherein the first inner ends 21a and the second outer ends 22b are positioned on one side S1 in the tire widthwise direction, and the second inner ends 22a and the first radially outer ends 21b are positioned on the other side S2 in the tire widthwise direction. Therefore, the first radial members 21 cross the second radial members 22 when viewed in the tire circumferential direction.

Unlike the former example in which the widths w1 and w2 in the tire circumferential direction are constant as shown in Fig. 2, according to claim 1, each of the cross radial members 20 is partially decreased in the width in the tire circumferential direction so that a constricted part 23 is formed in the range in the tire radial direction from the hub 3 to the tread ring 2 in order that the cross radial members 20 achieve a weight reduction and rigidity at the same time. Thereby, the ride comfort and the rolling resistance can be improved in a good balance.

while detailed description has been made of preferable embodiments of the present invention, the present invention can be embodied in various forms within the scope defined by the claims.

Based on the structure shown in Fig. 1, airless tires were experimentally manufactured and tested for the durability, ride comfort and rolling resistance.
The airless tires had a size corresponding to a pneumatic tire size 115/85R13 and specifications shown in Table 1.

### < Durability test >

using a tire test drum, each tire was run under a tire load of 1.5 kN at a speed of 60 km/h, and the running distance until failure occurred was measured. The results are indicated in Table 1 by an index based on Comparative example Ref.1 being 100, wherein the larger the index, the better the durability.

### < Ride comfort test >

Each tire was measured for the vertical spring constant under a tire load of 1.5 kN as a typical judgmental standard for the ride comfort. The results are indicated in Table 1 by an index based on Comparative example Ref.1 being 100, wherein the smaller the index, the better the ride comfort.

### < Rolling resistance test >

using a tire rolling resistance tester, each tire was measured for the rolling resistance at a speed of 40 km/h under a tire load of 1.17 kN, and the rolling resistance coefficient (=rolling resistance/tire load x 10^4) was obtained. The results are indicated in Table 1 by an index based on Comparative example Ref.1 being 100, wherein the smaller the index, the better the rolling resistance.

**Table 1**

| Tire | Ref. 1 | Ref. 2 | Ref. 3 | Ex. 1* | Ex. 2* | Ex. 3* |
|---|---|---|---|---|---|---|
| radial members | | | | | | |
| number of kind(s) | 1 | 2 | 2 | 2 | 2 | 2 |
| arrangement | not cross | not cross | cross | cross | cross | cross |
| width in circumferential direction | not constant | constant | constant | constant | constant | constant |
| constricted part | present | absent | absent | absent | absent | absent |
| first length L1 / distance D (%) | 100 | 103 | 185 | 125 | 106 | 110 |
| first length L1 / first distance d1 (%) | 102 | 102 | 102 | 102 | 102 | 102 |
| durability | 100 | 130 | 350 | 300 | 150 | 200 |
| ride comfort | 100 | 100 | 25 | 50 | 90 | 70 |
| rolling resistance | 100 | 100 | 175 | 110 | 103 | 105 |
| | | | | | | |

| Tire | Ex. 4* | Ex. 5* | Ex. 6* | Ex. 7* | Ex. 8 | |
|---|---|---|---|---|---|---|
| radial members | | | | | | |
| number of kind(s) | 2 | 2 | 2 | 2 | 2 | |
| arrangement | cross | cross | cross | cross | cross | |
| width in circumferential direction | constant | constant | constant | constant | not constant | |
| constricted part | absent | absent | absent | absent | present | |
| first length L1 / distance D (%) | 180 | 125 | 125 | 125 | 125 | |
| first length L1 / first distance d1 (%) | 102 | 100 | 110 | 115 | 102 | |
| durability | 300 | 200 | 200 | 160 | 300 | |
| ride comfort | 30 | 50 | 45 | 40 | 50 | |
| rolling resistance | 130 | 110 | 120 | 125 | 105 | |

| | | | | | | |
|---|---|---|---|---|---|---|
| * not according to claim 1 | | | | | | |

From the test results, it was confirmed that the airless tires according to the present invention can be improved in the durability, ride comfort and rolling resistance in a good balance as compared with Comparative examples.
- 2: tread ring
- 3: hub
- 4: spokes
- 5: first radial member
- 5a: first radially inner end
- 5b: first radially outer end
- 6: second radial member
- 6a: second radially inner end
- 6b: second radially outer end

## Claims

1. An airless tire (1) comprising:
a tread ring (2) having a tread,
a hub (3) located radially inside the tread ring (2), and
cross radial members (5, 6, 20) connecting the tread ring (2) with the hub (3) and formed in the shape of a plate with a center line, a width in the tire circumferential direction and a thickness in the tire axial direction measured perpendicularly to the centerline, wherein
the cross radial members (5, 6 20) include
first radial members (5, 21) each extending from its first radially inner end (5a, 21a) to its first radially outer end (5b, 21b), and
second radial members (6, 22) each extending from its second radially inner end (6a, 22a) to its second radially outer end (6b, 22b),
the first radially inner ends (5a, 21a) and the second radially outer ends (6b, 22b) are positioned on one side in the tire widthwise direction, whereas the second radially inner ends (6a, 22a) and the first radially outer ends (5b, 21b) are positioned on the other side in the tire widthwise direction, and
a first length (L1) measured along the center line of the first radial member (5, 21) from the first radially inner end (5a, 21a) to the first radially outer end (5b, 21b) is not more than 180 % of a distance (D) measured in the tire radial direction between the hub (3) and the tread ring (2),
wherein the thickness (t1, t2) of each of the cross radial members (5, 6, 20) is constant along its entire extension from the hub to the tread ring,
wherein each of the cross radial members (5, 6, 20) is curved in a tire meridian section including the radial member concerned,
**characterized in that**
the width of each of the cross radial members (5,6, 20) is partially decreased to have a constricted part (23) within the range from the hub (3) to the tread ring (2).

2. The airless tire (1) according to claim 1, wherein
a second length (L2) measured along the center line of the second radial member (6, 22) from the second radially inner end (6a, 22a) to the second radially outer end (6b, 22b) is equal to the first length (L1).

3. The airless tire (1) according to claim 1 or 2, wherein
the first length (L1) is not more than 110 % of a first distance (d1) between the first radially inner end (5a, 21a) and the first radially outer end (5b, 21b).

4. The airless tire (1) according to claim 1, 2 or 3,
wherein
the width of each of the cross radial members (5, 6, 20) is more than its thickness (t1, t2).

5. The airless tire (1) according to any one of claims 1 to 4, wherein
the first radial members (5, 21) and the second radial members (6, 22) are alternately arranged in the tire circumferential direction.

## Patentansprüche

1. Luftloser Reifen (1), umfassend:
einen Laufflächenabschnitt (2) mit einer Lauffläche,
eine Nabe (3), die radial innerhalb des Laufflächenrings (2) angeordnet ist, und
Querradialelemente (5, 6, 20), die den Laufflächenring (2) mit der Nabe (3) verbinden und in der Form einer Platte mit einer Mittellinie, einer Breite in der Reifenumfangsrichtung und einer Dicke in der Reifenaxialrichtung, gemessen senkrecht zur Mittellinie, ausgebildet sind, wobei
die Querradialelemente (5, 6, 20) umfassen
erste Radialelemente (5, 21), die sich jeweils von ihrem ersten radial inneren Ende (5a, 21a) zu ihrem ersten radial äußeren Ende (5b, 21b) erstrecken, und
zweite Radialelemente (6, 22), die sich jeweils von ihrem zweiten radial inneren Ende (6a, 22a) zu ihrem zweiten radial äußeren Ende (6b, 22b) erstrecken,
wobei die ersten radial inneren Enden (5a, 21a) und die zweiten radial äußeren Enden (6b, 22b) auf einer Seite in der Reifenbreitenrichtung angeordnet sind, wohingegen die zweiten radial inneren Enden (6a, 22a) und die ersten radial äußeren Enden (5b, 21b) auf der anderen Seite in der Reifenbreitenrichtung angeordnet sind, und
eine erste Länge (L1), gemessen entlang der Mittellinie des ersten Radialelements (5, 21) von dem ersten radial inneren Ende (5a, 21a) bis zu dem ersten radial äußeren Ende (5b, 21b), nicht mehr als 180 % eines Abstands (D), gemessen in der Reifenradialrichtung zwischen der Nabe (3) und dem Laufflächenring (2), beträgt,
wobei die Dicke (t1, t2) eines jeden der Querradialelemente (5, 6, 20) entlang seiner gesamten Ausdehnung von der Nabe bis zum Laufflächenring konstant ist,
wobei ein jedes der Querradialelemente (5, 6, 20) in einem Reifenmeridianschnitt, der das betreffende Radialelement einschließt, gekrümmt ist,
**dadurch gekennzeichnet, dass**
die Breite eines jeden der Querradialelemente (5, 6, 20) teilweise verringert ist, so dass es einen verengten Teil (23) innerhalb des Bereichs von der Nabe (3) bis zu dem Laufflächenring (2) aufweist.

2. Luftloser Reifen (1) nach Anspruch 1, wobei eine zweite Länge (L2), gemessen entlang der Mittellinie des zweiten Radialelements (6, 22) von dem zweiten radial inneren Ende (6a, 22a) bis zu dem zweiten radial äußeren Ende (6b, 22b), gleich der ersten Länge (L1) ist.

3. Luftloser Reifen (1) nach Anspruch 1 oder 2, wobei die erste Länge (L1) nicht mehr als 110 % eines ersten Abstands (d1) zwischen dem ersten radial inneren Ende (5a, 21a) und dem ersten radial äußeren Ende (5b, 21b) beträgt.

4. Luftloser Reifen (1) nach Anspruch 1, 2 oder 3, wobei die Breite eines jeden der Querradialelemente (5, 6, 20) größer als seine Dicke (t1, t2) ist.

5. Luftloser Reifen (1) nach einem der Ansprüche 1 bis 4, wobei die ersten Radialelemente (5, 21) und die zweiten Radialelemente (6, 22) abwechselnd in der Reifenumfangsrichtung angeordnet sind.

## Revendications

1. Bandage sans air (1) comprenant :
un anneau de roulement (2) ayant une bande de roulement,
un moyeu (3) situé radialement à l'intérieur de l'anneau de roulement (2), et des éléments radiaux transversaux (5, 6, 20) qui connectent l'anneau de roulement (2) avec le moyeu (3) et qui sont formés sous la configuration d'une plaque avec une ligne centrale, une largeur dans la direction circonférentielle du bandage, et une épaisseur dans la direction axiale du bandage mesurée perpendiculairement à la ligne centrale, dans lequel les éléments radiaux transversaux (5, 6, 20) incluent
des premiers éléments radiaux (5, 21) s'étendant chacun depuis sa première extrémité radialement intérieure (5a, 21a) jusqu'à sa première extrémité radialement extérieure (5b, 21b), et
des seconds éléments radiaux (6, 22) s'étendant chacun depuis sa seconde extrémité radialement intérieure (6a, 22a) jusqu'à sa seconde extrémité radialement extérieure (6b, 22b),
les premières extrémités radialement intérieures (5a, 21a) et les secondes extrémités radialement extérieures (6b, 22b) sont positionnées sur un côté dans la direction en largeur du bandage, tandis que les secondes extrémités radialement intérieures (6a, 22a) et les premières extrémités radialement extérieures (5b, 21b) sont positionnées sur l'autre côté dans la direction en largeur du bandage, et
une première longueur (L1) mesurée le long de la ligne centrale du premier élément radial (5, 21) depuis la première extrémité radialement intérieure (5a, 21a) jusqu'à la première extrémité radialement extérieure (5b, 21b) n'est pas plus de 180 % d'une distance (D) mesurée dans la direction radiale du bandage entre le moyeu (3) et l'anneau de roulement (2),
dans lequel l'épaisseur (t1, t2) de chacun des éléments radiaux transversaux (5, 6, 20) est constante le long de son extension entière depuis le moyeu jusqu'à l'anneau de roulement,
dans lequel chacun des éléments radiaux transversaux (5, 6, 20) est incurvé dans une section méridienne du bandage incluant l'élément radial concerné,
**caractérisé en ce que**
la largeur de chacun des éléments radiaux transversaux (5, 6, 20) est partiellement diminuée pour présenter une partie étranglée (23) à l'intérieur de la zone allant du moyeu (3) jusqu'à l'anneau de roulement (2).

2. Bandage sans air (1) selon la revendication 1, dans lequel
une seconde longueur (L2) mesurée le long de la ligne centrale du second élément radial (6, 22) depuis la seconde extrémité radialement intérieure (6a, 22a) jusqu'à la seconde extrémité radialement extérieure (6b, 22b) est égale à la première longueur (L1).

3. Bandage sans air (1) selon la revendication 1 ou 2, dans lequel
la première longueur (L1) n'est pas plus de 110 % d'une première distance (d1) entre la première extrémité radialement intérieure (5a, 21a) et la première extrémité radialement extérieure (5b, 21b).

4. Bandage sans air (1) selon la revendication 1, 2 ou 3,
dans lequel la largeur de chacun des éléments radiaux transversaux (5, 6, 20) est supérieure à son épaisseur (t1, t2).

5. Bandage sans air (1) selon l'une quelconque des revendications 1 à 4, dans lequel
les premiers éléments radiaux (5, 21) et les seconds éléments radiaux (6, 22) sont agencés alternativement dans la direction circonférentielle du bandage.
